# EUROPÄISCHE PATENTSCHRIFT

(11) **EP 3 242 050 B1**
(45) Veröffentlichungstag und Bekanntmachung des Hinweises auf die Patenterteilung: **29.01.2020**
(21) Anmeldenummer: 17167416.1
(22) Anmeldetag: 20.04.2017
(51) Int. Cl.: F16D 55/36, F16D 65/18

(54) **ACHSE EINER MOBILEN ARBEITSMASCHINE MIT EINER ALS FESTSTELLBREMSE UND ALS HYDRAULISCH BETÄTIGBAREN BETRIEBSBREMSE AUSGEBILDETEN BREMSEINRICHTUNG**
AXIS OF A MOBILE WORKING MACHINE WITH A BRAKING DEVICE WHICH CAN BE ACTUATED AS A PARKING BRAKE AND AS A HYDRAULICALLY ACTUATED OPERATING BRAKE
ESSIEU D'UN ENGIN DE TRAVAIL MOBILE COMPRENANT UN DISPOSITIF DE FREINAGE CONÇU SOUS LA FORME D'UN FREIN DE SERVICE HYDRAULIQUE ET SOUS LA FORME D'UN FREIN DE STATIONNEMENT

(30) Priorität: 03.05.2016 DE 102016108239
(43) Veröffentlichungstag der Anmeldung: 08.11.2017
(73) Patentinhaber: Linde Material Handling GmbH, 63743 Aschaffenburg (DE)
(72) Erfinder: YOUSEFI, Mostafa, 63743 Aschaffenburg (DE); GROHMANN, Timo, 63654 Büdingen (DE); SCHREIBER, Volker, 63843 Niedernberg (DE)
(74) Vertreter: Patentship Patentanwaltsgesellschaft mbH

(56) Entgegenhaltungen:
- DE-A1-102012 015 389
- DE-A1-102012 106 534
- DE-A1-102014 105 607
- US-A- 4 263 991

## Beschreibung

Die Erfindung betrifft eine Achse einer mobilen Arbeitsmaschine, insbesondere eines Flurförderzeugs, mit mindestens einer Achswelle und mit einer Bremseinrichtung, die eine Feststellbremse und eine hydraulisch betätigbare Betriebsbremse aufweist, wobei die Feststellbremse als Speicherbremse ausgebildet ist, die durch einen Energiespeicher in eine Bremsstellung und mittels eines Bremslöseaktuators in eine Lösestellung beaufschlagbar ist, und wobei die hydraulisch betätigbare Betriebsbremse eine hydraulisch betätigbare Bremskolbeneinrichtung aufweist, wobei die Bremseinrichtung mindestens einen mit der Achswelle zusammenwirkenden Bremsrotor und mindestens einen mit einem Achsgehäuse der Achse zusammenwirkenden Bremsstator aufweist, die zur Erzeugung eines Bremsmoments der Feststellbremse und der Betriebsbremse in Wirkverbindung miteinander bringbar sind.

Aus der US 4 263 991 A ist eine kombinierte hydraulische Federspeicher- und Betriebsbremse bekannt, bei der die Wirkrichtungen der Federspeicherbremse und der Betriebsbremse gleichgerichtet sind. Die Federspeicherbremse ist hydraulisch lösbar und die Betriebsbremse ist hydraulisch betätigbar. Die Federspeicherbremse ist von Federn in die Bremsstellung betätigt und weist zum Lösen einen hydraulisch betätigbaren Bremslösekolben auf. Für die Betriebsbremse ist eine hydraulisch betätigbare Kolbeneinrichtung vorgesehen, die auch von den Federn der Feststellbremse beaufschlagt ist. Die Kolbeneinrichtung der Betriebsbremse kann von einem Ringkolben oder alternativ von mehreren Punktkolben gebildet sein.

Eine gattungsgemäße Achse einer mobilen Arbeitsmaschine, bei der eine Bremseinrichtung gemeinsame Bremsrotoren und Bremsstatoren für eine Feststellbremse und eine hydraulisch betätigbare Betriebsbremse aufweist, ist aus der DE 10 2014 105 607 A1 bekannt. Bei der aus der DE 10 2014 105 607 A1 bekannten Bremseinrichtung ist die Feststellbremse als elektromagnetisch lösbare Speicherbremse ausgebildet, die als Bremslöseaktuator eine Ankerscheibe aufweist, die mittels einer Federeinrichtung als Energiespeicher in Richtung einer Bremsstellung und durch Bestromen eines Spulenkörpers in eine Lösestellung betätigbar ist. Die hydraulisch betätigbare Betriebsbremse der aus der DE 10 2014 105 607 A1 bekannten Bremseinrichtung weist eine hydraulisch betätigbare Bremskolbeneinrichtung auf, die von einem Ringkolben gebildet ist, der von der Achswelle zentrisch durchsetzt ist. Radial innerhalb des Ringkolbens ist weiterhin die Ankerscheibe angeordnet. Der Ringkolben ist als Stufenkolben ausgebildet, der am Außenumfang mit einer angeformten Durchmesserstufe versehen ist. Der Ringkolben ist in einer ebenfalls gestuften Gehäuseausnehmung des Achsgehäuses längsverschiebbar angeordnet. Zwischen der gestuften Gehäuseausnehmumg und der Durchmesserstufe des Ringkolbens ist ein Ringraum ausgebildet, der von einem hydraulischen Bremsdruck beaufschlagbar ist und der mittels zwei Dichtungen abgedichtet ist. An dem Ringkolben ergibt sich an der Durchmesserstufe eine von dem hydraulischen Bremsdruck beaufschlagbare Kreisringfläche, die den Ringkolben in Richtung der Bremsstellung beaufschlagt, um die Betriebsbremse zu betätigen.

Bei der aus der DE 10 2014 105 607 A1 bekannten Bremseinrichtung ist nachteilig, dass der Ringkolben der hydraulisch betätigbare Betriebsbremse einen großen Durchmesser aufweist und sich somit für den Ringkolben ein hoher Bauaufwand mit einem hohen Herstellaufwand ergibt. Zudem ist die gestufte Gehäuseausnehmung des Achsgehäuses, in der der Ringkolben längsverschiebbar angeordnet ist, aufwändig herzustellen, wodurch sich der Bauaufwand und der Herstellaufwand weiter erhöht. Insgesamt ergeben sich somit an die mechanische Bearbeitung des Ringkolbens und des Achsgehäuses hohe Anforderungen. Zudem weisen auch die beiden Dichtungen, die den vom Bremsdruck beaufschlagbaren Ringraum zwischen der Gehäuseausnehmung und der Durchmesserstufe des Ringkolbens abdichten, einen großen Durchmesser auf, wodurch diese entsprechend teuer sind und den Herstellaufwand weiter erhöhen. Weiterhin ergibt sich bei der aus der DE 10 2014 105 607 A1 bekannten Bremseinrichtung ein hohes Druckmittelvolumen, das in den Ringraum eingebracht werden muss, um den Ringkolben und somit die Betriebsbremse in die Bremsstellung betätigen zu können. Das Druckmittelvolumen für die Betätigung der Betriebsbremse in die Bremsstellung wird noch erhöht, da sich die im Durchmesser großen Dichtungen bei einem im Ringraum anstehenden Bremsdruck bei der Betätigung der Betriebsbremse stark verformen. Das hohe Druckmittelvolumen für die Betätigung der Betriebsbremse führt auch zu Problemen, da die Betriebsbremse nur schwer zu entlüften ist. Zudem weist der Ringkolben aufgrund des großen Durchmessers eine hohe Kolbenreibung auf. Die Reibung zwischen Ringkolben und den beiden Dichtungen ist somit aufgrund der großen Durchmesser sehr hoch.

Der vorliegenden Erfindung liegt die Aufgabe zugrunde, eine Achse der eingangs genannten Gattung zur Verfügung zu stellen, bei der die Betriebsbremse einen geringen Herstellaufwand aufweist, mit einem geringen Druckmittelvolumen in die Bremsstellung betätigt werden kann und die Bremskolbeneinrichtung geringe Reibung aufweist.

Diese Aufgabe wird erfindungsgemäß dadurch gelöst, dass die Bremskolbeneinrichtung mindestens zwei Bremskolben aufweist, die jeweils in einer Bohrung des Achsgehäuses längsverschiebbar angeordnet sind, wobei die Bohrungen von einem hydraulischen Bremsdruck beaufschlagbar sind. Anstelle eines großen Ringkolbens, der von der Achswelle zentrisch durchsetzt ist, werden somit erfindungsgemäß zur Betätigung der Betriebsbremse in die Bremsstellung mehrere im Durchmesser kleine Bremskolben, sogenannte Kleinkolben, verwendet, die jeweils in einer Bohrung des Achsgehäuses längsverschiebbar angeordnet sind. Die Bohrungen bilden hierbei einen von einem hydraulischen Bremsdruck beaufschlagbaren Steuerdruckraum, der zur Betätigung der Bremskolben und somit zur Betätigung der Betriebsbremse in die Bremsstellung mit einem Druckmittelvolumen gefüllt werden muss. Mehrere derartige Bremskolben, die jeweils einen geringen Durchmesser aufweisen, weisen gegenüber einem großen Ringkolben einen verringerten Herstellaufwand auf. Der Herstellaufwand der Betriebsbremse wird weiter verringert, da bei der Erfindung anstelle einer aufwändig herzustellenden gestuften Gehäuseausnehmung für den Ringkolben in dem Achsgehäuse nur mehrere mit geringem Herstellaufwand herzustellende einfache Bohrungen herzustellen sind. Ein wesentlicher Vorteil der Erfindung besteht darin, dass für die Betätigung der mehreren Bremskolben nur ein kleines Druckmittelvolumen erforderlich ist, das in die Bohrungen der Bremskoben eingebracht werden muss, um die Bremskolben und somit die Betriebsbremse in die Bremsstellung betätigen zu können. Das kleine Druckmittelvolumen für die Betätigung der Betriebsbremse in die Bremsstellung ermöglicht es auch, dass die Betriebsbremse einfach entlüften werden kann. Zudem weisen die kleinen Bremskolben aufgrund ihres geringen Durchmessers eine geringe Kolbenreibung auf, was zu weiteren Vorteilen führt.

Gemäß einer vorteilhaften Ausführungsform der Erfindung betätigen die Bremskolben unter Zwischenschaltung einer Druckplatte den Bremsrotor und den Bremsstator in eine Bremsstellung. Die Bremskolben drücken somit bei in den Bohrungen anstehendem Bremsdruck auf die Druckplatte, die wiederum den Bremsrotor und den Bremsstator der Bremseinrichtung bremsmomenterzeugend gegeneinander presst. Mit der Druckplatte, die von den mehreren Bremskolben betätigt ist, kann eine gute und gleichmäßige Verteilung der Flächenpressung von der durch die Bremskolben betätigten Druckplatte auf die Bremsrotoren und die Bremsstatoren der Bremseinrichtung erzielt werden, um eine hohe Bremswirkung zu erzielen.

Vorteilhafterweise sind gemäß einer bevorzugten Ausführungsform der Erfindung die Bremskolben im radialen Erstreckungsbereich der Anlageflächen zwischen dem Bremsrotor und dem Bremsstator angeordnet. Hierdurch ergeben sich Vorteile hinsichtlich eines günstigen Kraftflusses, da die Bremskolben über die Druckplatte den Bremsrotor und den Bremsstator direkt an den Anlageflächen zwischen dem Bremsrotor und dem Bremsstator axial zusammenpressen, an denen entsprechende Reibbeläge vorgesehen sind.

Hinsichtlich eines geringen Bauaufwandes und Herstellungsaufwandes ergeben sich besondere Vorteile, wenn gemäß einer bevorzugten Ausgestaltungsform der Erfindung die Bremskolben jeweils als Vollzylinderkörper ausgebildet sind. Derartige Bremskolben können auf einfache Weise und mit geringem Bauaufwand hergestellt werden, beispielsweise aus einem Stangenmaterial.

Gemäß einer vorteilhaften Weiterbildung der Erfindung sind die Bremskolben jeweils mittels einer Dichtungseinrichtung, insbesondere eines O-Ringes, in der Bohrung abgedichtet. Aufgrund des geringen Durchmessers der Bremskolben weisen die Dichtungseinrichtungen ebenfalls nur einen geringen Außendurchmesser auf, so dass die Dichtungseinrichtungen entsprechend kostengünstig sind. Die im Durchmesser kleinen Dichtungseinrichtungen verformen sich zudem bei in der Bohrung anstehendem Bremsdruck nur geringfügig, so dass sich kaum Verformungsvolumen ergibt, das das Druckmittelvolumen für die Betätigung der Betriebsbremse erhöht. Die im Durchmesser kleinen Bremskolben und Dichtungseinrichtungen führen weiterhin auch zu sehr geringen Reibkräften zwischen den Bremskolben und den Dichtungseinrichtungen.

Gemäß einer bevorzugten Ausgestaltungsform der Erfindung weist die Bremskolbeneinrichtung drei Bremskolben auf, die konzentrisch zur Drehachse der Achswelle angeordnet sind und in Umfangsrichtung gleichmäßig verteilt angeordnet sind. Mit drei in Umfangsrichtung gleichmäßig verteilt angeordneten Bremskolben kann mit geringem Bauaufwand von der Bremskolbeneinrichtung eine zentrische Druckkraft auf die Druckplatte erzeugt werden und eine gute und gleichmäßige Flächenpressungsverteilung von der Druckplatte auf den Bremsrotor und den Bremsstator der Bremseinrichtung erzielt werden.

Um die Bohrungen, in denen die Bremskolben längsverschiebbar angeordnet sind, mit dem Bremsdruck beaufschlagen zu können, ist gemäß einer vorteilhaften Weiterbildung der Erfindung vorgesehen, dass die Bohrungen mittels in dem Achsgehäuse angeordneten Querbohrungen mit einen am Achsgehäuse ausgebildeten Bremsdruckanschluss verbunden sind. Mit in dem Achsgehäuse angeordneten, einfach herzustellenden Querbohrungen können mit geringem Bauaufwand und bei geringem Herstellungsaufwand die Bohrungen der Bremskolben mit einem am Achsgehäuse ausgebildeten Bremsdruckanschluss verbunden werden.

Gemäß einer vorteilhaften Ausgestaltungsform der Erfindung verbindet eine Querbohrung jeweils zwei Bohrungen miteinander. Hierdurch wird es möglich, mit einer geringen Anzahl von Querbohrungen die Bohrungen der Bremskolben mit dem am Achsgehäuse ausgebildeten Bremsdruckanschluss zu verbinden.

Sofern gemäß einer bevorzugten Ausführungsform der Erfindung die Achswelle in einer Gehäusewand des Achsgehäuses mittels einer Lagereinrichtung drehbar gelagert ist, ergeben sich besondere Vorteile, wenn die Bohrungen der Bremskolben in der Gehäusewand angeordnet sind. In der Gehäusewand des Achsgehäuses können die Bohrungen der Bremskolben auf einfache Weise und mit geringem Bauaufwand hergestellt werden. Zudem wird durch die Anordnung der Bohrungen der Bremskolben in der Gehäusewand des Achsgehäuses auf einfache Weise eine Anordnung der Bremskolben erzielbar, bei der die Bremskolben im radialen Erstreckungsbereich der Anlageflächen zwischen dem Bremsrotor und dem Bremsstator angeordnet sind.

Vorteilhafterweise sind gemäß einer Weiterbildung der Erfindung auch die Querbohrungen, die die Bohrungen der Bremskolben mit dem am Achsgehäuse ausgebildeten Bremsdruckanschluss verbinden, in der Gehäusewand des Achsgehäuses ausgebildet.

Gemäß einer bevorzugten Ausführungsform der Erfindung befinden sich die Bremskolben der Betriebsbremse auf einer Seite der Bremseinrichtung und der Bremslöseaktuator der Feststellbremse auf der gegenüberliegenden Seite der Bremseinrichtung. Hierdurch wird es mit den erfindungsgemäßen mehreren Bremskolben, die in Bohrungen des Achsgehäuses angeordnet sind und bei in den Bohrungen anstehendem Bremsdruck den Bremsrotor und den Bremsstator der Bremseinrichtung zusammenpressen, auf einfache Weise ermöglicht, eine als Feststellbremse und Betriebsbremse ausgebildete Bremseinrichtung vorzusehen, die für die Feststellbremse und Betriebsbremse gemeinsame Bremsrotoren und Bremsstatoren aufweist.

Die Feststellbremse ist gemäß einer vorteilhaften Ausgestaltungsform der Erfindung als elektromagnetische Speicherbremse ausgebildet, wobei der Bremslöseaktuator eine Ankerscheibe aufweist. Die Ankerscheibe kann durch Bestromen eines Spulenkörpers auf einfache Weise zum Betätigen der Speicherbremse in die Lösestellung beaufschlagt werden.

Die Feststellbremse ist gemäß einer alternativen und ebenfalls vorteilhaften Ausgestaltungsform der Erfindung als hydraulisch lösbare Speicherbremse ausgebildet, wobei der Bremslöseaktuator eine weitere Druckplatte aufweist, die mittels einer Bremslösekolbeneinrichtung in eine Lösestellung beaufschlagbar ist. Mit einer weiteren, von der Bremslösekolbeneinrichtung beaufschlagten Druckplatte kann auf einfache Weise die Speicherbremse in die Lösestellung beaufschlagt werden.

Gemäß einer vorteilhaften Ausgestaltungsform der Erfindung weist die Bremslösekolbeneinrichtung mindestens zwei Bremslösekolben auf, die jeweils in einer Bohrung des Achsgehäuses längsverschiebbar angeordnet sind, wobei die Bohrungen von einem hydraulischen Bremslösedruck beaufschlagbar sind. Zur Betätigung der Speicherbremse in die Lösestellung werden somit ebenfalls mehrere im Durchmesser kleine Bremslösekolben, sogenannte Kleinkolben, verwendet, die jeweils in einer Bohrung des Achsgehäuses längsverschiebbar angeordnet sind. Die Bohrungen bilden hierbei einen von einem hydraulischen Bremslösedruck beaufschlagbaren Steuerdruckraum, der zur Betätigung der Bremslösekolben und somit zur Betätigung der Speicherbremse in die Lösestellung von dem Bremslösedruck beaufschlagt werden muss. Mit mehreren derartigen Bremslösekolben, die jeweils einen geringen Durchmesser aufweisen, ergibt ich ein geringer Herstellaufwand für eine hydraulisch lösbare Speicherbremse.

Vorteilhafterweise sind die Bremslösekolben in radialer Richtung außerhalb der Bremskolben der Bremskolbeneinrichtung angeordnet. Sofern die Bremslösekolben in radialer Richtung weiterhin außerhalb des Erstreckungsbereichs der Anlageflächen zwischen dem Bremsrotor und dem Bremsstator angeordnet sind, ergeben sich Vorteile, da die Bohrungen der Bremskolben und die Bohrungen der Bremslösekolben mit geringem Herstellaufwand auf konzentrischen Kreisen, die unterschiedliche Durchmesser aufweisen, im Achsgehäuse angeordnet werden können.

Hinsichtlich eines geringen Bauaufwandes und Herstellungsaufwandes ergeben sich besondere Vorteile, wenn gemäß einer bevorzugten Ausgestaltungsform der Erfindung die Bremslösekolben jeweils als Vollzylinderkörper ausgebildet sind. Derartige Bremslösekolben können auf einfache Weise und mit geringem Bauaufwand hergestellt werden, beispielsweise aus einem Stangenmaterial.

Gemäß einer vorteilhaften Weiterbildung der Erfindung sind die Bremslösekolben jeweils mittels einer Dichtungseinrichtung, insbesondere eines O-Ringes, in der Bohrung abgedichtet. Aufgrund des geringen Durchmessers der Bremslösekolben weisen die Dichtungseinrichtungen ebenfalls nur einen geringen Außendurchmesser auf, so dass die Dichtungseinrichtungen entsprechend kostengünstig sind. Die im Durchmesser kleinen Bremslösekolben und Dichtungseinrichtungen führen zudem auch zu sehr geringen Reibkräften zwischen den Bremslösekolben und den Dichtungseinrichtungen.

Besondere Vorteile ergeben sich, wenn gemäß einer bevorzugten Ausgestaltungsform der Erfindung die Bremskolben der Bremskolbeneinrichtung und die Bremslösekolben der Bremslösekolbeneinrichtung als Gleichteile ausgebildet sind. Für das Lösen der Speicherbremse und das Betätigen der Betriebsbremse werden somit baugleiche Kolben verwendet, wodurch sich der Bauaufwand weiter verringern lässt. Hierdurch ergeben sich auf gleich große Bohrungen im Achsgehäuse für die Bremskolben der Bremskolbeneinrichtung und für die Bremslösekolben der Bremslösekolbeneinrichtung, was die Herstellung der Bohrungen im Achsgehäuse entsprechend einfach macht.

Gemäß einer bevorzugten Ausgestaltungsform der Erfindung weist die Bremslösekolbeneinrichtung zwei Bremslösekolben auf, die konzentrisch zur Drehachse der Achswelle angeordnet sind und in Umfangsrichtung gleichmäßig verteilt angeordnet sind. Mit zwei in Umfangsrichtung gleichmäßig verteilt und somit bezüglich der Drehachse der Achswelle gegenüberlegend angeordneten Bremslösekolben kann mit geringem Bauaufwand die weitere Druckplatte in eine Lösestellung der Speicherbremse betätigt werden.

Um die Bohrungen, in denen die Bremslösekolben längsverschiebbar angeordnet sind, mit dem Bremslösedruck beaufschlagen zu können, ist gemäß einer vorteilhaften Weiterbildung der Erfindung vorgesehen, dass die Bohrungen der Bremslösekolben mittels in dem Achsgehäuse angeordneten Querbohrungen mit einen am Achsgehäuse ausgebildeten Bremslösedruckanschluss verbunden sind. Mit in dem Achsgehäuse angeordneten, einfach herzustellenden Querbohrungen können mit geringem Bauaufwand und bei geringem Herstellungsaufwand die Bohrungen der Bremslösekolben mit einem am Achsgehäuse ausgebildeten Bremslösedruckanschluss verbunden werden.

Mit besonderem Vorteil sind gemäß einer vorteilhaften Ausführungsform der Erfindung die Bohrungen der Bremslösekolben in der Gehäusewand des Achsgehäuses angeordnet. In der Gehäusewand des Achsgehäuses, in der bereits die Bohrungen der Bremskolben angeordnet sind, können die Bohrungen der Bremslösekolben auf einfache Weise und mit geringem zusätzlichen Bauaufwand hergestellt werden.

Vorteilhafterweise sind gemäß einer Weiterbildung der Erfindung auch die Querbohrungen, die die Bohrungen der Bremslösekolben mit dem am Achsgehäuse ausgebildeten Bremslösedruckanschluss verbinden, in der Gehäusewand des Achsgehäuses ausgebildet.

Um bei einer Anordnung der Bremslösekolben in Bohrungen der Gehäusewand des Achsgehäuses die weitere Druckplatte betätigen zu können, stehen gemäß einer vorteilhaften Weiterbildung der Erfindung die Bremslösekolben jeweils unter Zwischenschaltung einer Druckstange mit der weiteren Druckplatte in Wirkverbindung. Die Bremslösekolben drücken somit bei in den Bohrungen anstehendem Bremslösedruck unter Zwischenschaltung der Druckstangen auf die weitere Druckplatte, um den Bremsrotor und den Bremsstator der Bremseinrichtung in die Lösestellung zu betätigen.

Die Druckstangen können an der weiteren Druckplatte einstückig angeformt sein. Vorteilhafterweise sind die Druckstangen an der weiteren Druckplatte lösbar befestigt, wodurch sich der Bauaufwand verringern lässt.

Gemäß einer bevorzugten Ausgestaltungsform der Erfindung weist die Achse eine erste Achswelle und eine zur ersten Achswelle konzentrisch angeordnete zweite Achswelle auf, wobei die Bremseinrichtung auf beide Achswellen wirkt und an den achsinnenseitigen Enden der beiden Achswellen angeordnet ist. Die Bremseinrichtung ist somit mittig zwischen den beiden Achswellen angeordnet und ermöglicht es, beide Achswellen abzubremsen. Mit der erfindungsgemäßen Ausführung der Bremskolbeneinrichtung von mehreren im Durchmesser kleinen Bremskolben kann eine mittig angeordnete Bremseinrichtung, die als Feststellbremse und als Betriebsbremse arbeitet, mit geringem Bauaufwand und Herstellaufwand für die Bremskolbeneinrichtung der Betriebsbremse zur Verfügung gestellt werden.

Die Achse kann als Laufradachse ausgebildet sein, bei der die Achswellen nicht angetrieben sind. Alternativ kann die Achse als Antriebsachse ausgebildet sein, die mindestens eine Achswelle als Antriebswellen ausgebildet ist, die von einem Antriebsmotor, insbesondere einem Elektromotor, angetrieben ist.

Weitere Vorteile und Einzelheiten der Erfindung werden anhand der in den schematischen Figuren dargestellten Ausführungsbeispiele näher erläutert. Hierbei zeigen
- Figur 1: einen Ausschnitt einer ersten Ausführungsform einer erfindungsgemäßen Achse in einem Längsschnitt,
- Figur 2: eine Ansicht gemäß der Linie A-A der Figur 1,
- Figur 3: einen Ausschnitt einer zweiten Ausführungsform einer erfindungsgemäßen Achse in einem Längsschnitt und
- Figur 4: eine Ansicht gemäß der Linie A-A der Figur 3.

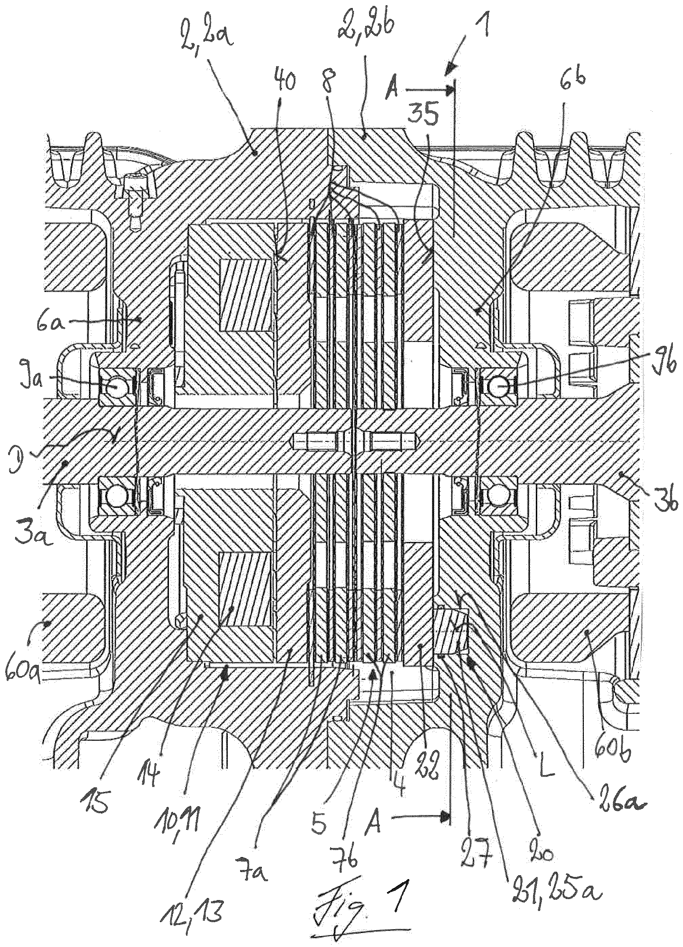

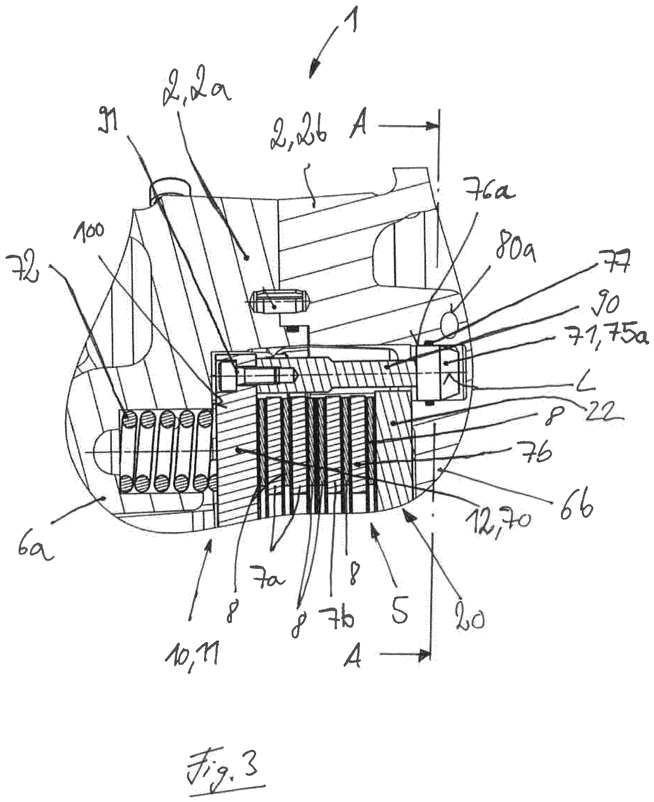

In den Figuren 1 und 3 ist eine erfindungsgemäße Achse 1 einer mobilen Arbeitsmaschine, beispielsweise eines Flurförderzeugs, in einem Längsschnitt dargestellt.

Die Achse 1 weist ein Achsgehäuse 2 auf, in dem eine erste Achswelle 3a und eine zur ersten Achswelle 3a konzentrisch (koaxial) angeordnete zweite Achswelle 3b drehbar um eine Drehachse D angeordnet sind. Die beiden Achswellen 3a, 3b sind zueinander fluchtend axial hintereinander angeordnet und enden achsinnenseitig in einem in Achsmitte oder annähernd in Achsmitte angeordneten Achsgehäusebereich, der einen Bremsenraum 4 bildet, in dem eine Bremseinrichtung 5 angeordnet ist.

Im dargestellten Ausführungsbeispiel ist das Achsgehäuse 2 von zwei Gehäusehälften 2a, 2b gebildet, die im Bereich des Bremsenraumes 4 geteilt sind.

Das Achsgehäuse 2 weist eine erste Gehäusewand 6a auf, in dem die erste Achswelle 3a mittels eines Lagers 9a, beispielsweise eines Wälzlagers, drehbar gelagert ist. Entsprechend weist das Achsgehäuse 2 eine zweite Gehäusewand 6b auf, in dem die zweite Achswelle 3b mittels eines Lagers 9b, beispielsweise eines Wälzlagers, drehbar gelagert ist. Die Gehäusewände 6a, 6b sind jeweils senkrecht zur Drehachse D angeordnet und in axialer Richtung voneinander beabstandet.

Die an den achsinnenseitigen Enden der beiden Achswellen 3a, 3b angeordnete Bremseinrichtung 5 ist in axialer Richtung zwischen den beiden Gehäusewänden 6a, 6b angeordnet, die den Bremsenraum 4 in axialer Richtung begrenzen.

Die Bremseinrichtung 5 ist im dargestellten Ausführungsbeispiel als Lamellenbremse ausgebildet. Die Bremseinrichtung 5 besteht aus abwechselnd angeordneten ersten und zweiten Bremsrotoren 7a, 7b und Bremsstatoren 8. Die ersten Bremsrotoren 7a der Bremseinrichtung 5 wirken mit der ersten Achswelle 3a zusammen und sind am achsinnenseitigen Ende der ersten Achswelle 3a drehfest, jedoch axial verschiebbar angeordnet. Die zweiten Bremsrotoren 7b der Bremseinrichtung 5 wirken mit der zweiten Achswelle 3b zusammen und sind am achsinnenseitigen Ende der zweiten Achswelle 3b drehfest, jedoch axial verschiebbar angeordnet. Die Bremsstatoren 8 wirken mit dem Achsgehäuse 2 zusammen und sind am Achsgehäuse 2 drehfest, jedoch axial verschiebbar angeordnet.

Die Bremseinrichtung 5 weist die Funktion einer Feststellbremse 10 auf, die als Speicherbremse 11 ausgebildet. Die Speicherbremse 11 ist durch einen in der Figur 1 nicht näher dargestellten Energiespeicher in eine Bremsstellung und mittels eines Bremslöseaktuators 12 in eine Lösestellung beaufschlagbar.

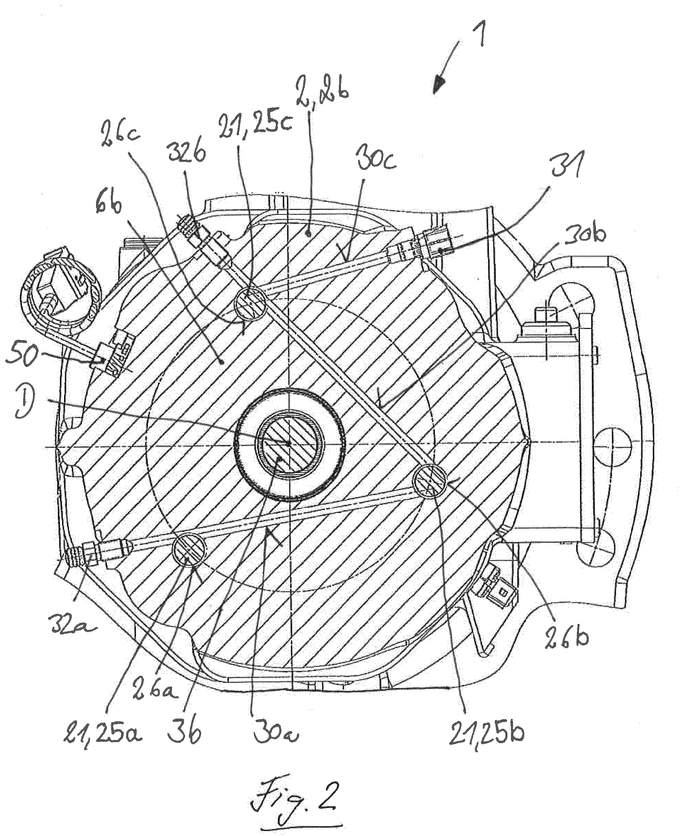

Im Ausführungsbeispiel der Figuren 1 und 2 ist die Speicherbremse 11 als elektromagnetisch lösbare Speicherbremse 11 ausgebildet, wobei der Bremslöseaktuator 12 eine Ankerscheibe 13 umfasst. Die Ankerscheibe 13 wirkt mit einem Spulenkörper 14 zusammen, der in einem Spulengehäuse 15 angeordnet ist, das in dem Achsgehäuse 2 befestigt ist. Der nicht näher dargestellten Energiespeicher kann von einer Federeinrichtung gebildet werden, der die Ankerscheibe 13 in axialer Richtung nach in der Figur 1 rechts in eine Bremsstellung der Bremseinrichtung 5 beaufschlagt. Durch Bestromen des Spulenkörpers 14 ist eine der Kraftrichtung des Energiespeichers entgegengesetzte gerichtete Magnetkraft erzeugbar, die auf die Ankerscheibe 13 wirkt und die Ankerscheibe 13 in axialer Richtung nach in der Figur 1 links in eine Lösestellung der Bremseinrichtung 5 beaufschlagt. Die Speicherbremse 11 kann hierbei als Parkbremse ausgebildet sein, mit der die Arbeitsmaschine im Stillstand gehalten werden kann.

Das Spulengehäuse 15 und die Ankerscheibe 13 sind im Bereich des Wellenendes der ersten Achswelle 3a angeordnet. Das Spulengehäuse 15 und die Ankerscheibe 13 sind mit einer zentrischen Ausnehmung versehen, durch die sich die erste Achswelle 3a hindurch erstreckt.

Die Bremseinrichtung 5 weist weiterhin die Funktion einer hydraulisch betätigbaren Betriebsbremse 20 auf. Die Betriebsbremse 20 ist durch eine Bremskolbeneinrichtung 21 in eine Bremsstellung beaufschlagbar. Die Bremskolbeneinrichtung 21 bildet einen Bremsaktuator der Betriebsbremse 20. Mit der Bremskolbeneinrichtung 21 kann die Bremseinrichtung 5 als Betriebsbremse der Arbeitsmaschine ausgebildet werden, mit der die fahrende Arbeitsmaschine dosiert abgebremst werden kann.

Die Bremskolbeneinrichtung 21 betätigt unter Zwischenschaltung einer Druckplatte 22 die Bremsrotoren 7a, 7b und die Bremsstatoren 8 der Bremseinrichtung 5 in eine Bremsstellung.

Die Bremskolbeneinrichtung 21 und die Druckplatte 22 sind im Bereich des Wellenendes der zweiten Achswelle 3b angeordnet. Die Druckplatte 22 ist mit einer zentrischen Ausnehmung versehen, durch die sich die zweite Achswelle 3b hindurch erstreckt.

Die Bremskolbeneinrichtung 21 der Betriebsbremse 20 ist somit auf einer Seite der Bremseinrichtung 5 und der Bremslöseaktuator 12 der Feststellbremse 10 auf der gegenüberliegenden Seite der Bremseinrichtung 5 angeordnet. Die für die Feststellbremse 10 und die Betriebsbremse 20 gemeinsamen Bremsrotoren 7a, 7b und Bremsstatoren 8 der Bremseinrichtung 5 befinden sich somit in axialer Richtung zwischen dem Bremslöseaktuator 12 der Feststellbremse 10 und der den Bremsaktuator der Betriebsbremse 20 bildenden Bremskolbeneinrichtung 21.

Erfindungsgemäß weist die Bremskolbeneinrichtung 21 - wie in Verbindung mit der Figur 2 ersichtlich ist - mindestens zwei Bremskolben 25a, 25b, 25c auf, die jeweils in einer Bohrung 26a, 26b, 26c des Achsgehäuses 2 längsverschiebbar angeordnet sind. Die Bohrungen 26a, 26b, 26c sind von einem hydraulischen Bremsdruck beaufschlagbar und bilden somit einen von dem hydraulischen Bremsdruck beaufschlagbaren Steuerdruckraum zur Betätigung der Bremskolben 25a, 25b, 25c. Die Bohrungen 26a, 26b, 26c sind mit ihrer Längsachse L in radialer Richtung beabstandet von der Drehachse D der Achswellen 3a, 3b und parallel zu der Drehachse D der Achswellen 3a, 3b angeordnet.

Wie aus der Figur 1 ersichtlich ist, sind die Bremskolben 25a, 25b, 25c in radialer Richtung derart von der Drehachse D der Achswellen 3a, 3b beabstandet, dass sich die Bremskolben 25a, 25b, 25c im radialen Erstreckungsbereich der Anlageflächen zwischen den Bremsrotoren, 7a, 7b und den Bremsstatoren 8 befinden, an denen die Bremsrotoren, 7a, 7b und die Bremsstatoren 8 in der Bremsstellung der Bremseinrichtung 5 aneinander liegen.

Die Bremskolben 25a, 25b, 25c sind - wie aus der Figur 1 ersichtlich ist - jeweils als Vollzylinderkörper ausgebildet.

Wie in der Figur 1 dargestellt ist, sind die Bremskolben 25a, 25b, 25c jeweils mittels einer Dichtungseinrichtung 27, beispielsweise eines O-Ringes, in der entsprechenden Bohrung 26a, 26b, 26c abgedichtet.

Im dargestellten Ausführungsbeispiel weist die Bremskolbeneinrichtung 21 - wie aus der Figur 2 ersichtlich ist - drei Bremskolben 25a, 25b, 25c auf, die konzentrisch zur Drehachse D der Achswellen 3a, 3b angeordnet sind und in Umfangsrichtung gleichmäßig verteilt angeordnet sind.

Um die Bohrungen 26a, 26b, 26c, in denen die Bremskolben 25a, 25b, 25c längsverschiebbar angeordnet sind und die einen Steuerdruckraum zur Betätigung der Bremskolben 25a, 25b, 25c bilden, von dem hydraulischen Bremsdruck beaufschlagen zu können, sind die Bohrungen 26a, 26b, 26c mittels in dem Achsgehäuse 2 angeordneten Querbohrungen 30a, 30b miteinander verbunden und an einen am Achsgehäuse 2 ausgebildeten Bremsdruckanschluss 31 angeschlossen. An den Bremsdruckanschluss 31 ist eine nicht näher dargestellte Bremsleitung angeschlossen, in der hydraulische Bremsdruck erzeugbar ist. Der hydraulische Bremsdruck kann beispielsweise mittels eines durch ein Bremspedal betätigbaren Geberzylinders erzeugt werden.

Im dargestellten Ausführungsbeispiel ist die Querbohrungen 30a von einer Außenseite des Achsgehäuses 2 in das Achsgehäuse 2 eingebracht und verbindet die Bohrung 26a mit der Bohrung 26b. Die Querbohrung 30a ist im Bereich der Bohrung 26a in das Achsgehäuse 2 eingebracht und endet an der Bohrung 26b. Die Querbohrung 30b ist ebenfalls von der Außenseite des Achsgehäuses 2 in das Achsgehäuse 2 eingebracht und verbindet die Bohrung 26b mit der Bohrung 26c. Die Querbohrung 30b ist im Bereich der Bohrung 26c in das Achsgehäuse 2 eingebracht und endet an der Bohrung 26b.

Der Bremsdruckanschluss 31 kann an einer der beiden Querbohrung 30a bzw. 30b angebracht werden, wobei die jeweils andere Querbohrung 30b bzw. 30a mit einem Stopfen flüssigkeitsdicht verschlossen ist. Im dargestellten Ausführungsbeispiel ist der Bremsdruckanschluss 31 getrennt von den Querbohrungen 30a, 30b am Achsgehäuse 2 angeordnet und es ist eine weitere Querbohrung 30c im Achsgehäuse 2 vorgesehen, die den Bremsdruckanschluss 31 mit einer der Bohrung 26a, 26b, 26c oder einer der Querbohrung 30a bzw. 30b verbindet. Im dargestellten Ausführungsbeispiel ist die Querbohrung 30c von einer Außenseite des Achsgehäuses 2 in das Achsgehäuse 2 eingebracht und erstreckt sich zu der Bohrung 26c, so dass der Bremsdruckanschluss 31 mit der Bohrung 26c verbunden ist. Die Querbohrungen 30a, 30b sind jeweils mittels eines Stopfens 32a, 32b flüssigkeitsdicht abgedichtet.

Im dargestellten Ausführungsbeispiel sind die Bohrungen 26a, 26b, 26c der Bremskolben 25a, 25b, 25c in der Gehäusewand 6b des Achsgehäuses 2 angeordnet. Die Querbohrungen 30a, 30b, 30c sind ebenfalls in der Gehäusewand 6b des Achsgehäuses 2 angeordnet.

Die Druckplatte 22 stützt sich an einer Anlagefläche 35 ab, die an der Gehäusewand 6b ausgebildet ist. Die Bremskolben 25a, 25b, 25c sind im Bereich der Anlagefläche 35 angeordnet und in der Gehäusewand 6b angeordnet.

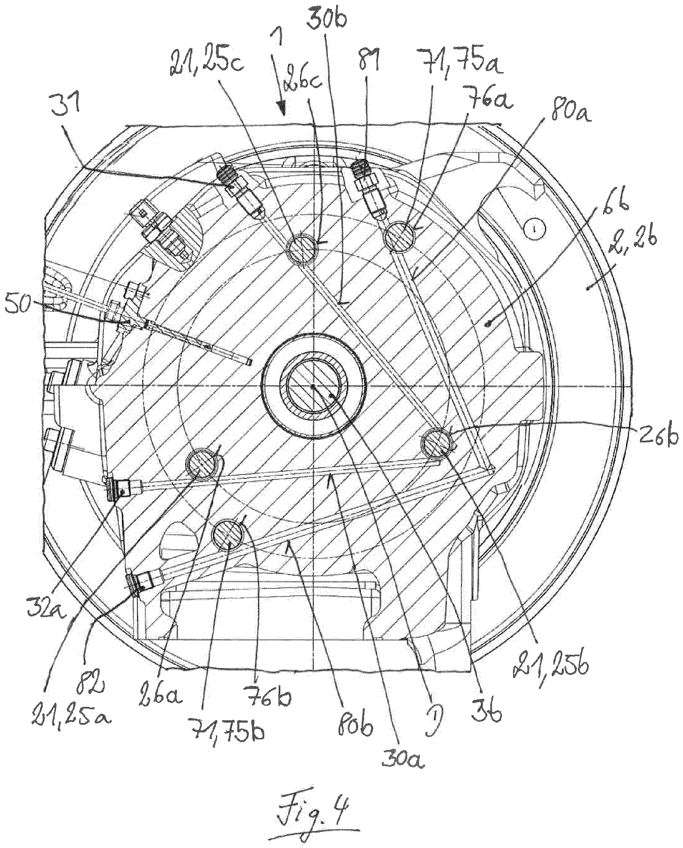

Das Ausführungsbeispiel der Figuren 3 und 4 unterschiedet sich von dem Ausführungsbeispiel der Figuren 1 und 2 lediglich hinsichtlich der Ausbildung der Speicherbremse 11, die in dem Ausführungsbeispiel der Figuren 3 und 4 als hydraulisch lösbare Speicherbremse 11 ausgebildet ist. In dem Ausführungsbeispiel der Figuren 3 und 4 sind mit dem Ausführungsbeispiel der Figuren 1 und 2 gleiche Bauteile mit gleichen Bezugsziffern versehen.

Im Ausführungsbeispiel der Figuren 3 und 4 ist die Speicherbremse 11 als hydraulisch lösbare Speicherbremse 11 ausgebildet, wobei der Bremslöseaktuator 12 eine weitere Druckplatte 70 aufweist, die mittels einer Bremslösekolbeneinrichtung 71 in eine Lösestellung beaufschlagbar ist. In der Figur 3 ist auch der Energiespeicher näher dargestellt, der von einer Federeinrichtung 72 gebildet ist, der die weitere Druckplatte 70 in axialer Richtung nach in der Figur 3 rechts in eine Bremsstellung der Bremseinrichtung 5 beaufschlagt. Durch Beaufschlagen der Bremslösekolbeneinrichtung 71 mit einem Bremslösedruck ist eine der Kraftrichtung der Federeinrichtung 72 entgegengesetzte gerichtete Kraft erzeugbar, die auf die weitere Druckplatte 70 wirkt und die weitere Druckplatte 70 in axialer Richtung nach in der Figur 3 links in eine Lösestellung der Bremseinrichtung 5 beaufschlagt. Die Speicherbremse 11 kann hierbei als Parkbremse ausgebildet sein, mit der die Arbeitsmaschine im Stillstand gehalten werden kann.

Die weitere Druckplatte 70 ist im Bereich des Wellenendes der ersten Achswelle 3a angeordnet und mit einer zentrischen Ausnehmung versehen, durch die sich die erste Achswelle 3a hindurch erstreckt.

Die Bremslösekolbeneinrichtung 71 weist - wie in Verbindung mit der Figur 4 ersichtlich ist - mindestens zwei Bremslösekolben 75a, 75b auf, die jeweils in einer Bohrung 76a, 76b des Achsgehäuses 2 längsverschiebbar angeordnet sind. Die Bohrungen 76a, 76b sind jeweils von einem hydraulischen Bremslösedruck beaufschlagbar und bilden somit einen von dem hydraulischen Bremslösedruck beaufschlagbaren Steuerdruckraum zur Betätigung der Bremslösekolben 75a, 75b. Die Bohrungen 76a, 76b sind mit ihrer Längsachse L in radialer Richtung beabstandet von der Drehachse D der Achswellen 3a, 3b und parallel zu der Drehachse D der Achswellen 3a, 3b angeordnet.

Wie aus der Figur 4 ersichtlich ist, sind die Bremslösekolben 75a, 75b in radialer Richtung außerhalb der Bremskolben 25a, 25b, 25b der Bremskolbeneinrichtung 21 angeordnet. Die Bremslösekolben 75a, 75b sind auf einem äußeren Teilkreis angeordnet, der konzentrisch zur Drehachse D ist, und die Bremskolben 25a, 25b, 25b auf einem inneren Teilkreis, der ebenfalls konzentrisch zur Drehachse D ist. Der Durchmesser des äußeren Teilkreises ist größer wie der Durchmesser des inneren Teilkreises.

Die Bremslösekolben 75a, 75b befinden sich in radialer Richtung weiterhin außerhalb des radialen Erstreckungsbereichs der Anlageflächen zwischen den Bremsrotoren, 7a, 7b und den Bremsstatoren 8, an denen die Bremsrotoren, 7a, 7b und die Bremsstatoren 8 in der Bremsstellung der Bremseinrichtung 5 aneinander liegen.

Die Bremslösekolben 75a, 75b sind - wie aus der Figur 3 ersichtlich sind - jeweils als Vollzylinderkörper ausgebildet.

Wie in der Figur 3 ersichtlich ist, sind die Bremslösekolben 75a, 75b jeweils mittels einer Dichtungseinrichtung 77, insbesondere eines O-Ringes, in der entsprechenden Bohrung 76a, 76b abgedichtet.

Im dargestellten Ausführungsbeispiel weist die Bremslösekolbeneinrichtung 71- wie aus der Figur 4 ersichtlich ist - zwei Bremslösekolben 75a, 75b auf, die konzentrisch zur Drehachse D der Achswelle 3a, 3b angeordnet sind und in Umfangsrichtung gleichmäßig verteilt angeordnet sind. Die beiden Bremslösekolben 75a, 75b sind somit gegenüberliegend zur Drehachse D angeordnet.

Um die Bohrungen 76a, 76b, in denen die Bremslösekolben 75a, 75b längsverschiebbar angeordnet sind und die einen Steuerdruckraum zur Betätigung der Bremslösekolben 75a, 75b bilden, von dem hydraulischen Bremslösedruck beaufschlagen zu können, sind die Bohrungen 76a, 76b der Bremslösekolben 75a, 75b mittels in dem Achsgehäuse 2 angeordneten Querbohrungen 80a, 80b mit einen am Achsgehäuse 2 ausgebildeten Bremslösedruckanschluss 81 verbunden. An den Bremslösedruckanschluss 81 ist eine nicht näher dargestellte Bremslöseleitung angeschlossen, in der hydraulische Bremslösedruck erzeugbar ist.

Im dargestellten Ausführungsbeispiel ist die Querbohrungen 80a von einer Außenseite des Achsgehäuses 2 in das Achsgehäuse 2 eingebracht und schneidet die Bohrung 76a. Die Querbohrung 80a ist im Bereich der Bohrung 76a in das Achsgehäuse 2 eingebracht. Die Querbohrung 80b ist ebenfalls von der Außenseite des Achsgehäuses 2 in das Achsgehäuse 2 eingebracht und schneidet die Bohrung 76b. Die Querbohrung 80b ist im Bereich der Bohrung 76b in das Achsgehäuse 2 eingebracht. Die Querbohrungen 80a, 80b schneiden sich an den Spitzen.

Der Bremslösedruckanschluss 81 kann an einer der beiden Querbohrung 80a bzw. 80b angebracht werden, wobei die jeweils andere Querbohrung 80b bzw. 80a mit einem Stopfen flüssigkeitsdicht verschlossen ist. Im dargestellten Ausführungsbeispiel ist der Bremslösedruckanschluss 81 an der Querbohrung 80a angeordnet. Die andere Querbohrungen 80b ist mittels eines Stopfens 82 flüssigkeitsdicht abgedichtet.

Im dargestellten Ausführungsbeispiel sind die Bohrungen 76a, 76b der Bremslösekolben 75a, 75b in der Gehäusewand 6b des Achsgehäuses 2 angeordnet. Die Bohrungen 76a, 76b der Bremslösekolben 75a, 75b sind parallel zu den Bohrungen 26a, 26b, 26b der Bremskolben 25a, 25b, 25c angeordnet. Die Querbohrungen 80a, 80b sind ebenfalls in der Gehäusewand 6b des Achsgehäuses 2 ausgebildet.

Die Bremslösekolben 75a, 75b stehen jeweils unter Zwischenschaltung einer Druckstange 90 mit der weiteren Druckplatte 70 in Wirkverbindung stehen. Die Druckstange 90 ist in Verlängerung der Längsachse L der Bremslösekolben 75a, 75b angeordnet. Im dargestellten Ausführungsbeispiel sind die Druckstangen 90 an der weiteren Druckplatte 70 lösbar befestigt, beispielsweise mittels einer Verschraubung 91.

Die Bremskolben 25a; 25b; 25c der Bremskolbeneinrichtung 21 und die Bremslösekolben 75a, 75b der Bremslösekolbeneinrichtung 71 sind bevorzugt als Gleichteile ausgebildet. Dadurch können ebenfalls gleiche Bohrungen 26a, 26b, 26c und 76a, 76b in dem Achsgehäuse 2 hergestellt werden und gleiche Dichtungen 27, 77 verwendet werden.

In dem Ausführungsbeispiel der Figuren 3 und 4 stellen der Bremsdruck und der Bremslösedruck zwei unterschiedliche Druckmittelkreisläufe dar. In dem Ausführungsbeispiel der Figuren 3 und 4 weist bevorzugt der Bremslösedruck ein höheres Druckniveau wie der Bremsdruck auf, um mit den nur zwei Bremslösekolben 75a, 75b, die baugleich mit den Bremskolben 25a, 325b, 25b sind, die Speicherbremse 11 in die Lösestellung betätigen zu können.

Die Wirkungsweise der Bremseinrichtung 5 ist wie folgt:
Im unbestromten Zustand des Spulenköpers 14 der Speicherbremse 11 der Figuren 1 und 2 wird die Ankerscheibe 13 unter der Wirkung des Energiespeichers gegen das Paket aus Bremsrotoren 7a, 7b und Bremsstatoren 8 gedrückt, die sich über die Druckplatte 22 an der Anlagefläche 35 des Achsgehäuses 2 abstützen. Sofern bei den Figuren 3 und 4 die Bremslösekolben 75a, 75b nicht von einem Bremslösedruck beaufschlagt sind, wird die weitere Druckplatte 70 unter der Wirkung des von der Federeinrichtung 72 gebildeten Energiespeichers gegen das Paket aus Bremsrotoren 7a, 7b und Bremsstatoren 8 gedrückt, die sich über die Druckplatte 22 an der Anlagefläche 35 des Achsgehäuses 2 abstützen. Durch das erzeugte Bremsmoment werden die Achswellen 3a, 3b relativ zum Achsgehäuse 2 blockiert es wird eine mit der Bremseinrichtung ausgerüstete Arbeitsmaschine im Stillstand gehalten (Parkbremse).

Wird in den Figuren 1 und 2 der Spulenkörper 14 der Speicherbremse 11 zum Lösen der Speicherbremse 11 bestromt, dann entsteht eine Magnetkraft, die der Kraft des Energiespeichers axial entgegengerichtet wirksam ist und die Ankerscheibe 13 zur Anlage an eine Vorderseite 40 des Spulenkörpers 15 bringt. Die Bremsrotoren 7a, 7b und die Bremsstatoren 8 sind daher entlastet, die Achswellen 3a, 3b können rotieren.

Werden in den in den Figuren 3 und 4 die äußeren Bremskolben 75a, 75b zum Lösen der Speicherbremse 11 mit dem Bremslösedruck beaufschlagt, erzeugen die Bremskolben 75a, 75 eine der Kraft des Energiespeichers axial entgegengerichte Kraft und drücken über die Druckstangen 90 die weitere Druckplatte 70 zur Anlage an eine Stirnwand 100 des Achsgehäuses 2. Die Bremsrotoren 7a, 7b und die Bremsstatoren 8 sind daher entlastet, die Achswellen 3a, 3b können rotieren.

Um die rotierenden Achswellen 3a, 3b bei gelöster Speicherbremse 11 gesteuert mittels der Betriebsbremse 20 abzubremsen, wird in die Bohrungen 26a, 26c, 26c der Bremskolben 25a, 25b, 25c ein hydraulischer Bremsdruck aufgebracht, so dass die Bremskolben 25a, 25b, 25c nach in den Figuren 1 und 3 links bewegt werden und die Bremskolben 25a, 25b, 25c auf die Druckplatte 22 drücken. Über die Druckplatte 22 werden die Bremsrotoren 7a, 7b und die Bremsstatoren 8 bremsmomenterzeugend gegeneinander und gegen die als Widerlager dienende Ankerscheibe 13 gepresst, die dabei an der Vorderseite 40 des Spulengehäuses 15 anliegt (Figur 1) bzw. gegen die als Widerlager dienende weitere Druckplatte 70 gepresst, die dabei an der Stirnwand 100 des Achsgehäuses 2 anliegt (Figur 3).

Mit den in den Figuren 2 und 4 dargestellten drei Bremskolben 25a, 25b, 25c, die in Umfangsrichtung gleichmäßig verteilt sind, ergeben sich besondere Vorteile, da hierdurch an der Druckplatte 22 eine zentrische Druckkraft erzielt wird. Weiterhin wird eine gute und gleichmäßige Verteilung der Flächenpressung von der Druckplatte 22 auf die Bremsrotoren 7a, 7b und die Bremsstatoren 8 erzielt. Zudem wird es bei der in den Figuren 2 und 4 dargestellten Anordnung der drei Bremskolben 25a, 25b, 25c ermöglicht, die Querbohrungen 30a, 30b, 30c, die die Bohrungen 26a, 26b, 26c mit dem hydraulischen Bremsdruck versorgen, zu entgraten. Zudem können die beiden Querbohrungen 30a, 30b der Figuren 2 und 4 und die beiden Querbohrungen 80a, 80b der Figur 4 jeweils V-förmig angeordnet werden, wodurch in der Gehäusewand 6b im Bereich zwischen den beiden Querbohrungen 30a, 30b ein Drehzahlsensor 50 zur Erfassung der Drehzahl der Achswelle 3b angeordnet werden kann.

Es versteht sich jedoch, dass die Bremskolbeneinrichtung 21 auch eine andere Zahl von Bremskolben aufweisen kann. Beispielsweise kann die Bremskolbeneinrichtung 21 nur zwei Bremskolben aufweisen, die in entsprechenden Bohrungen des Achsgehäuses 2 längsverschiebbar angeordnet sind und in Umfangsrichtung gleichmäßig verteilt sind. Dies kann jedoch zu einem Verkanten der Druckplatte 22 führen, wenn die Reibung zwischen Druckplatte 22 und Achsgehäuse 2 zu hoch ist. Zudem ist mit nur zwei Bremskolben die Flächenpressungsverteilung von der Druckplatte 22 auf die Bremsrotoren 7a, 7b und die Bremsstatoren 8 ungünstiger. Zudem kann es bei nur zwei Bremskolben unmöglich werden, eine Querbohrung zu entgraten, die die beiden Bohrungen mit dem Bremsdruckanschluss 31 verbindet. Alternativ kann die Bremskolbeneinrichtung 21 vier Bremskolben aufweisen, die in entsprechenden Bohrungen des Achsgehäuses längsverschiebbar angeordnet sind und in Umfangsrichtung gleichmäßig verteilt sind. Aufgrund der erhöhten Anzahl von Querbohrungen, um die vier Bohrungen mit dem Bremsdruckanschluss 31 zu verbinden, kann es hierdurch jedoch in der Gehäusewand 6b unmöglich werden, einen Platz zum Einbau des Drehzahlsensors 40 zu finden.

Bei der erfindungsgemäßen Achse 1 ist die Bremskolbeneinrichtung 21 der Betriebsbremse 20 von mehreren, bevorzugt von drei, im Durchmesser kleinen Bremskolben 25a, 25b, 25c, sogenannten Kleinkolben, gebildet, die jeweils in einer Bohrung 26a, 26b, 26c des Achsgehäuses 2 angeordnet sind. Die Bohrungen 26a, 26b, 26c im Achsgehäuse 2 können mit geringem Bauaufwand in kostengünstiger Weise hergestellt werden, insbesondere wenn die Bohrungen 26a, 26b, 26c in der Gehäusewand 6b angeordnet sind. Zudem weisen die als Kleinkolben ausgeführten Bremskolben 25a, 25b, 25c jeweils einen geringen Bauaufwand und Herstellkosten auf. Die in der Gehäusewand 6b eingebauten Bremskolben 25a, 25b, 25c benötigen zur Betätigung der Betriebsbremse 20 in die Bremsstellung nur ein kleines Druckmittelvolumen, das in die Bohrungen 26a, 26b, 26c eingebracht werden muss. Dadurch ist die Betriebsbremse 20 weiterhin auch leicht zu entlüften. Zudem sind für jeden Bremskolben 26a, 26c, 26c nur jeweils eine einzige Dichtungseinrichtung 27 erforderlich, die ebenfalls jeweils nur den Bohrungsdurchmesser der Bohrungen 26a, 26b, 26c aufweisen müssen. Für die im Außendurchmesser kleinen Dichtungseinrichtungen 27 ergibt sich somit ebenfalls ein geringer Herstellaufwand. Die im Außendurchmesser kleinen Dichtungseinrichtungen 27 verformen sich weiterhin bei einem in der entsprechenden Bohrung 26a, 26b, 26c anstehenden Bremsdruck bei der Betätigung der Betriebsbremse 20 nur sehr gering, wodurch sich kaum Verformungsvolumen ergibt, welches eine Steigerung des Druckmittelvolumens zur Betätigung der Betriebsbremse 20 bewirkt. Zudem weisen die im Durchmesser kleinen Bremskolben 26a, 26b, 26c und die im Durchmesser kleinen Dichtungseinrichtungen 27 eine geringe Reibung mit geringen Reibkräften auf. Zudem ist mit der erfindungsgemäßen Bremskolbeneinrichtung 21 eine vereinfachte Montage der Achse 1 erzielbar.

Die Erfindung ist nicht auf die dargestellte Ausführung der Achse 1 mit zwei Achswellen 3a, 3b beschränkt. Alternativ kann die Achse 1 nur eine Achswelle 3a bzw. 3b aufweisen, die mittels der Bremseinrichtung 5 abbremsbar ist.

Die Achse 1 kann als nicht angetriebene Achse oder als Antriebsachse ausgebildet sein. Im dargestellten Ausführungsbeispiel ist die Achse 1 als Antriebsachse ausgebildet, wobei die erste Achswelle 3a als Antriebwelle eines ersten Antriebsmotors 60a, beispielsweise eines elektrischen Fahrmotors, und die zweite Achswelle 3b als Antriebwelle eines zweiten Antriebsmotors 60b, beispielsweise eines elektrischen Fahrmotors, ausgebildet ist. Es versteht sich, dass die Erfindung nicht auf eine derartige Zwei-Motoren-Achse beschränkt ist, sondern ebenfalls als Ein-Motoren-Achse ausgebildet sein kann, bei denen die Achswellen 3a, 3b als Antriebwellen ausgebildet sind, die von einem gemeinsamen Antriebsmotor, beispielsweise einem elektrischen Fahrmotor, angetrieben werden.

## Patentansprüche

1. Achse (1) einer mobilen Arbeitsmaschine, insbesondere eines Flurförderzeugs, mit mindestens einer Achswelle (3a; 3b) und mit einer Bremseinrichtung (5), die eine Feststellbremse (10) und eine hydraulisch betätigbare Betriebsbremse (20) aufweist, wobei die Feststellbremse (10) als Speicherbremse (11) ausgebildet ist, die durch einen Energiespeicher in eine Bremsstellung und mittels eines Bremslöseaktuators (12) in eine Lösestellung beaufschlagbar ist, und wobei die hydraulisch betätigbare Betriebsbremse (20) eine hydraulisch betätigbare Bremskolbeneinrichtung (21) aufweist, wobei die Bremseinrichtung (5) mindestens einen mit der Achswelle (3a; 3b) zusammenwirkenden Bremsrotor (7a; 7b) und mindestens einen mit einem Achsgehäuse (2) der Achse (1) zusammenwirkenden Bremsstator (8) aufweist, die zur Erzeugung eines Bremsmoments der Feststellbremse (10) und der Betriebsbremse (20) in Wirkverbindung miteinander bringbar sind, **dadurch gekennzeichnet, dass** die Bremskolbeneinrichtung (21) mindestens zwei Bremskolben (25a; 25b; 25c) aufweist, die jeweils in einer Bohrung (26a; 26b; 26c) des Achsgehäuses (2) längsverschiebbar angeordnet sind, wobei die Bohrungen (26a, 26b, 26c) von einem hydraulischen Bremsdruck beaufschlagbar sind.

2. Achse nach Anspruch 1, **dadurch gekennzeichnet, dass** die Bremskolben (25a; 25b, 25c) unter Zwischenschaltung einer Druckplatte (22) den Bremsrotor (7a; 7b) und den Bremsstator (8) in eine Bremsstellung betätigen.

3. Achse nach Anspruch 1 oder 2, **dadurch gekennzeichnet, dass** die Bremskolben (25a; 25b; 25c) im radialen Erstreckungsbereich der Anlageflächen zwischen dem Bremsrotor (7a; 7b) und dem Bremsstator (8) angeordnet sind.

4. Achse nach einem der Ansprüche 1 bis 3, **dadurch gekennzeichnet, dass** die Bremskolben (25a; 25b; 25c) jeweils als Vollzylinderkörper ausgebildet sind.

5. Achse nach einem der Ansprüche 1 bis 4, **dadurch gekennzeichnet, dass** die Bremskolben (25a; 25b; 25c) jeweils mittels einer Dichtungseinrichtung (27), insbesondere eines O-Ringes, in der Bohrung (26a; 26b; 26c) abgedichtet sind.

6. Achse nach einem der Ansprüche 1 bis 5, **dadurch gekennzeichnet, dass** die Bremskolbeneinrichtung (21) drei Bremskolben (25a, 25a, 25b) aufweist, die konzentrisch zur Drehachse (D) der Achswelle (3a; 3b) angeordnet sind und in Umfangsrichtung gleichmäßig verteilt angeordnet sind.

7. Achse nach einem der Ansprüche 1 bis 6, **dadurch gekennzeichnet, dass** die Bohrungen (26a; 26b; 26c) mittels in dem Achsgehäuse (2) angeordneten Querbohrungen (30a, 30b) mit einen am Achsgehäuse (2) ausgebildeten Bremsdruckanschluss (31) verbunden sind.

8. Achse nach Anspruch 7, **dadurch gekennzeichnet, dass** eine Querbohrung (30a; 30b) jeweils zwei Bohrungen (26a, 26b; 26b, 26c) miteinander verbindet.

9. Achse nach einem der Ansprüche 1 bis 8, **dadurch gekennzeichnet, dass** die Achswelle (3a; 3b) in einer Gehäusewand (6a; 6b) des Achsgehäuses (2) mittels einer Lagereinrichtung (9a; 9b) drehbar gelagert ist, wobei die Bohrungen (26a, 26b, 26c) der Bremskolben (25a, 25b, 25c) in der Gehäusewand (6a; 6b) angeordnet sind.

10. Achse nach Anspruch 9, **dadurch gekennzeichnet, dass** die Querbohrungen (30a, 30b) in der Gehäusewand (6a; 6b) des Achsgehäuses (2) ausgebildet sind.

11. Achse nach einem der Ansprüche 1 bis 10, **dadurch gekennzeichnet, dass** sich die Bremskolben (26a, 26b, 26c) der Betriebsbremse (20) auf einer Seite der Bremseinrichtung (5) und der Bremslöseaktuator (12) der Feststellbremse (10) auf der gegenüberliegenden Seite der Bremseinrichtung (5) befinden.

12. Achse nach einem der Ansprüche 1 bis 11, **dadurch gekennzeichnet, dass** die Feststellbremse (10) als elektromagnetische Speicherbremse (11) ausgebildet ist, wobei der Bremslöseaktuator (12) eine Ankerscheibe (13) aufweist.

13. Achse nach einem der Ansprüche 1 bis 11, **dadurch gekennzeichnet, dass** die Feststellbremse (10) als hydraulisch lösbare Speicherbremse (11) ausgebildet ist, wobei der Bremslöseaktuator (12) eine weitere Druckplatte (70) aufweist, die mittels einer Bremslösekolbeneinrichtung (71) in eine Lösestellung beaufschlagbar ist.

14. Achse nach Anspruch 13, **dadurch gekennzeichnet, dass** die Bremslösekolbeneinrichtung (71) mindestens zwei Bremslösekolben (75a; 75b) aufweist, die jeweils in einer Bohrung (76a; 76b) des Achsgehäuses (2) längsverschiebbar angeordnet sind, wobei die Bohrungen (76a; 76b) von einem hydraulischen Bremslösedruck beaufschlagbar sind.

15. Achse nach Anspruch 14, **dadurch gekennzeichnet, dass** die Bremslösekolben (75a; 75b) in radialer Richtung außerhalb der Bremskolben (25a; 25b; 25c) der Bremskolbeneinrichtung (21) angeordnet sind.

16. Achse nach Anspruch 14 oder 15, **dadurch gekennzeichnet, dass** die Bremslösekolben (75a; 75b) jeweils als Vollzylinderkörper ausgebildet sind.

17. Achse nach einem der Ansprüche 14 bis 16, **dadurch gekennzeichnet, dass** die Bremslösekolben (75a; 75b) jeweils mittels einer Dichtungseinrichtung (77), insbesondere eines O-Ringes, in der Bohrung (76a; 76b) abgedichtet sind.

18. Achse nach einem der Ansprüche 14 bis 17, **dadurch gekennzeichnet, dass** die Bremskolben (25a; 25b; 25c) der Bremskolbeneinrichtung (21) und die Bremslösekolben (75a; 75b) der Bremslösekolbeneinrichtung (71) als Gleichteile ausgebildet sind.

19. Achse nach einem der Ansprüche 14 bis 18, **dadurch gekennzeichnet, dass** die Bremslösekolbeneinrichtung (71) zwei Bremslösekolben (75a, 75b) aufweist, die konzentrisch zur Drehachse (D) der Achswelle (3a; 3b) angeordnet sind und in Umfangsrichtung gleichmäßig verteilt angeordnet sind.

20. Achse nach einem der Ansprüche 14 bis 19, **dadurch gekennzeichnet, dass** die Bohrungen (76a; 76b) der Bremslösekolben (71) mittels in dem Achsgehäuse (2) angeordneten Querbohrungen (80a; 80b) mit einen am Achsgehäuse (2) ausgebildeten Bremslösedruckanschluss (81) verbunden sind.

21. Achse nach einem der Ansprüche 14 bis 20, **dadurch gekennzeichnet, dass** die Bohrungen (76a; 76b) der Bremslösekolben (75a; 75b) in der Gehäusewand (6a; 6b) des Achsgehäuses (2) angeordnet sind.

22. Achse nach Anspruch 21, **dadurch gekennzeichnet, dass** die Querbohrungen (80a; 80b) in der Gehäusewand (6a; 6b) des Achsgehäuses (2) ausgebildet sind.

23. Achse nach einem der Ansprüche 14 bis 22, **dadurch gekennzeichnet, dass** die Bremslösekolben (75a; 75b) jeweils unter Zwischenschaltung einer Druckstange (90) mit der weiteren Druckplatte (70) in Wirkverbindung stehen.

24. Achse nach Anspruch 23, **dadurch gekennzeichnet, dass** die Druckstangen (90) an der weiteren Druckplatte (70) einstückig angeformt oder befestigt sind.

25. Achse nach einem der Ansprüche 1 bis 24, **dadurch gekennzeichnet, dass** die Achse (1) eine erste Achswelle (3a) und eine zur ersten Achswelle (3a) konzentrisch angeordnete zweite Achswelle (3b) aufweist, wobei die Bremseinrichtung (5) auf beide Achswellen (3a, 3b) wirkt und an den achsinnenseitigen Enden der beiden Achswellen (3a, 3b) angeordnet ist.

26. Achse nach einem der Ansprüche 1 bis 25, **dadurch gekennzeichnet, dass** die Achse (1) als Antriebsachse ausgebildet ist, wobei die mindestens eine Achswelle (3a; 3b) als Antriebswellen ausgebildet ist, die von einem Antriebsmotor (20a, 20b), insbesondere einem Elektromotor, angetrieben ist.

## Claims

1. Axle (1) of a mobile working machine, in particular an industrial truck, having at least one axle shaft (3a; 3b) and having a braking device (5) which has a parking brake (10) and a hydraulically actuatable service brake (20), wherein the parking brake (10) is configured as a storage brake (11), which can be loaded into a braking position by an energy store and into a release position by means of a brake release actuator (12), and wherein the hydraulically actuatable service brake (20) has a hydraulically actuatable brake piston device (21), wherein the braking device (5) has at least one brake rotor (7a; 7b) interacting with the axle shaft (3a; 3b) and at least one brake stator (8) interacting with an axle housing (2) of the axle (1), which can be connected operatively to each other in order to produce a braking torque of the parking brake (10) and the service brake (20), **characterized in that** the brake piston device (21) has at least two brake pistons (25a; 25b; 25c), which are each longitudinally displaceably arranged in a bore (26a; 26b; 26c) of the axle housing (2), wherein the bores (26a, 26b, 26c) can be loaded by a hydraulic brake pressure.

2. Axle according to Claim 1, **characterized in that** the brake pistons (25a; 25b, 25c) actuate the brake rotor (7a; 7b) and the brake stator (8) into a braking position with the interposition of a pressure plate (22).

3. Axle according to Claim 1 or 2, **characterized in that** the brake pistons (25a; 25b; 25c) are arranged in the radial extension region of the contact surfaces between the brake rotor (7a; 7b) and the brake stator (8).

4. Axle according to one of Claims 1 to 3, **characterized in that** the brake pistons (25a; 25b; 25c) are each configured as solid cylinder bodies.

5. Axle according to one of Claims 1 to 4, **characterized in that** the brake pistons (25a; 25b; 25c) are each sealed off in the bore (26a; 26b; 26c) by means of a sealing device (27), in particular an O ring.

6. Axle according to one of Claims 1 to 5, **characterized in that** the brake piston device (21) has three brake pistons (25a, 25a, 25b), which are arranged concentrically with respect to the axis of rotation (D) of the axle shaft (3a; 3b) and are arranged distributed uniformly in the circumferential direction.

7. Axle according to one of Claims 1 to 6, **characterized in that** the bores (26a; 26b; 26c) are connected via transverse bores (30a, 30b) arranged in the axle housing (2) to a brake pressure port (31) configured on the axle housing (2).

8. Axle according to Claim 7, **characterized in that** a transverse bore (30a; 30b) respectively connects two bores (26a, 26b; 26b, 26c) to each other.

9. Axle according to one of Claims 1 to 8, **characterized in that** the axle shaft (3a; 3b) is rotatably mounted in a housing wall (6a; 6b) of the axle housing (2) by means of a bearing device (9a; 9b), wherein the bores (26a, 26b, 26c) of the brake pistons (25a, 25b, 25c) are arranged in the housing wall (6a; 6b).

10. Axle according to Claim 9, **characterized in that** the transverse bores (30a, 30b) are configured in the housing wall (6a; 6b) of the axle housing (2).

11. Axle according to one of Claims 1 to 10, **characterized in that** the brake pistons (26a, 26b, 26c) of the service brake (20) are located on one side of the braking device (5), and the brake release actuator (12) of the parking brake (10) is located on the opposite side of the braking device (5) .

12. Axle according to one of Claims 1 to 11, **characterized in that** the parking brake (10) is configured as an electromagnetic storage brake (11), wherein the brake release actuator (12) has an armature disc (13).

13. Axle according to one of Claims 1 to 11, **characterized in that** the parking brake (10) is configured as a hydraulically releasable storage brake (11), wherein the brake release actuator (12) has a further pressure plate (70), which can be loaded into a release position by means of a brake release piston device (71).

14. Axle according to Claim 13, **characterized in that** the brake release piston device (71) has at least two brake release pistons (75a; 75b), which are each longitudinally displaceably arranged in a bore (76a; 76b) of the axle housing (2), wherein the bores (76a; 76b) can be loaded by a hydraulic brake release pressure.

15. Axle according to Claim 14, **characterized in that** the brake release pistons (75a; 75b) are arranged outside the brake pistons (25a; 25b; 25c) of the brake piston device (21) in the radial direction.

16. Axle according to Claim 14 or 15, **characterized in that** the brake release pistons (75a; 75b) are each configured as solid cylinder bodies.

17. Axle according to one of Claims 14 to 16, **characterized in that** the brake release pistons (75a; 75b) are each sealed off in the bore (76a; 76b) by means of a sealing device (77), in particular an O ring.

18. Axle according to one of Claims 14 to 17, **characterized in that** the brake pistons (25a; 25b; 25c) of the brake piston device (21) and the brake release pistons (75a; 75b) of the brake release piston device (71) are configured as identical parts.

19. Axle according to one of Claims 14 to 18, **characterized in that** the brake release piston device (71) has two brake release pistons (75a, 75b), which are arranged concentrically with respect to the axis of rotation (D) of the axle shaft (3a; 3b) and are arranged distributed uniformly in the circumferential direction.

20. Axle according to one of Claims 14 to 19, **characterized in that** the bores (76a; 76b) of the brake release pistons (71) are connected by means of transverse bores (80a; 80b) arranged in the axle housing (2) to a brake release pressure port (81) configured on the axle housing (2).

21. Axle according to one of Claims 14 to 20, **characterized in that** the bores (76a; 76b) of the brake release pistons (75a; 75b) are arranged in the housing wall (6a; 6b) of the axle housing (2).

22. Axle according to Claim 21, **characterized in that** the transverse bores (80a; 80b) are configured in the housing wall (6a; 6b) of the axle housing (2).

23. Axle according to one of Claims 14 to 22, **characterized in that** the brake release pistons (75a; 75b) are each operatively connected to the further pressure plate (70) with the interposition of a pressure rod (90).

24. Axle according to Claim 23, **characterized in that** the pressure rods (90) are integrally moulded on or fixed to the further pressure plate (70).

25. Axle according to one of Claims 1 to 24, **characterized in that** the axle (1) has a first axle shaft (3a) and a second axle shaft (3b) arranged concentrically with respect to the first axle shaft (3a), wherein the braking device (5) acts on both axle shafts (3a, 3b) and is arranged on the axially inner ends of the two axle shafts (3a, 3b).

26. Axle according to one of Claims 1 to 25, **characterized in that** the axle (1) is configured as a drive axle, wherein the at least one axle shaft (3a; 3b) is configured as a drive shaft which is driven by a drive motor (20a; 20b), in particular an electric motor.

## Revendications

1. Essieu (1) d'un engin de travail mobile, en particulier d'un chariot de manutention, comprenant au moins un arbre d'essieu (3a ; 3b) et un dispositif de freinage (5) qui comprend un frein de stationnement (10) et un frein de service (20) pouvant être actionné de manière hydraulique, le frein de stationnement (10) étant réalisé sous forme de frein à accumulation (11) qui peut être sollicité dans une position de freinage par un accumulateur d'énergie et dans une position de desserrage au moyen d'un actionneur de desserrage de frein (12), et le frein de service (20) pouvant être actionné de manière hydraulique comprenant un dispositif de pistons de frein (21) pouvant être actionné de manière hydraulique, le dispositif de freinage (5) comprenant au moins un rotor de frein (7a ; 7b) coopérant avec l'arbre d'essieu (3a ; 3b) et au moins un stator de frein (8) coopérant avec un carter (2) de l'essieu (1), lesquels peuvent être amenés en liaison fonctionnelle l'un avec l'autre pour produire un couple de freinage du frein de stationnement (10) et du frein de service (20), **caractérisé en ce que** le dispositif de pistons de frein (21) comprend au moins deux pistons de frein (25a ; 25b ; 25c) qui sont disposés de manière déplaçable longitudinalement respectivement dans un alésage (26a ; 26b ; 26c) du carter d'essieu (2), les alésages (26a, 26b, 26c) pouvant être soumis à l'action d'une pression de freinage hydraulique.

2. Essieu selon la revendication 1, **caractérisé en ce que** les pistons de frein (25a ; 25b, 25c) actionnent, par l'intermédiaire d'un plateau de pression (22), le rotor de frein (7a ; 7b) et le stator de frein (8) dans une position de freinage.

3. Essieu selon la revendication 1 ou 2, **caractérisé en ce que** les pistons de frein (25a ; 25b ; 25c) sont disposés dans la région d'étendue radiale des surfaces d'appui entre le rotor de frein (7a ; 7b) et le stator de frein (8).

4. Essieu selon l'une des revendications 1 à 3, **caractérisé en ce que** les pistons de frein (25a ; 25b ; 25c) sont réalisés respectivement sous forme de corps cylindriques pleins.

5. Essieu selon l'une des revendications 1 à 4, **caractérisé en ce que** les pistons de frein (25a ; 25b ; 25c) sont étanchéifiés respectivement au moyen d'un dispositif d'étanchéité (27), en particulier d'un joint torique, dans l'alésage (26a ; 26b ; 26c).

6. Essieu selon l'une des revendications 1 à 5, **caractérisé en ce que** le dispositif de pistons de frein (21) comprend trois pistons de frein (25a, 25a, 25b) qui sont disposés concentriquement à l'axe de rotation (D) de l'arbre d'essieu (3a ; 3b) et sont disposés de manière répartie uniformément dans la direction périphérique.

7. Essieu selon l'une des revendications 1 à 6, **caractérisé en ce que** les alésages (26a ; 26b ; 26c) sont reliés à un raccord de pression de freinage (31) réalisé au niveau du carter d'essieu (2) au moyen d'alésages transversaux (30a, 30b) disposés dans le carter d'essieu (2) .

8. Essieu selon la revendication 7, **caractérisé en ce qu'**un alésage transversal (30a ; 30b) relie l'un à l'autre respectivement deux alésages (26a, 26b ; 26b, 26c) .

9. Essieu selon l'une des revendications 1 à 8, **caractérisé en ce que** l'arbre d'essieu (3a ; 3b) est monté rotatif dans une paroi (6a ; 6b) du carter d'essieu (2) au moyen d'un dispositif de palier (9a ; 9b), les alésages (26a, 26b, 26c) des pistons de frein (25a, 25b, 25c) étant disposés dans la paroi de carter (6a ; 6b).

10. Essieu selon la revendication 9, **caractérisé en ce que** les alésages transversaux (30a, 30b) sont réalisés dans la paroi (6a ; 6b) du carter d'essieu (2).

11. Essieu selon l'une des revendications 1 à 10, **caractérisé en ce que** les pistons de frein (26a, 26b, 26c) du frein de service (20) se situent sur un côté du dispositif de freinage (5) et l'actionneur de desserrage de frein (12) du frein de stationnement (10) se situe sur le côté opposé du dispositif de freinage (5).

12. Essieu selon l'une des revendications 1 à 11, **caractérisé en ce que** le frein de stationnement (10) est réalisé sous forme de frein à accumulation (11) électromagnétique, l'actionneur de desserrage de frein (12) comprenant un disque d'armature (13).

13. Essieu selon l'une des revendications 1 à 11, **caractérisé en ce que** le frein de stationnement (10) est réalisé sous forme de frein à accumulation (11) pouvant être desserré de manière hydraulique, l'actionneur de desserrage de frein (12) comprenant un autre plateau de pression (70) qui peut être sollicité dans une position de desserrage au moyen d'un dispositif de pistons de desserrage de frein (71).

14. Essieu selon la revendication 13, **caractérisé en ce que** le dispositif de pistons de desserrage de frein (71) comprend au moins deux pistons de desserrage de frein (75a ; 75b) qui sont disposés de manière déplaçable longitudinalement respectivement dans un alésage (76a ; 76b) du carter d'essieu (2), les alésages (76a ; 76b) pouvant être soumis à l'action d'une pression hydraulique de desserrage de frein.

15. Essieu selon la revendication 14, **caractérisé en ce que** les pistons de desserrage de frein (75a ; 75b) sont disposés à l'extérieur des pistons de frein (25a ; 25b ; 25c) du dispositif de pistons de frein (21) dans la direction radiale.

16. Essieu selon la revendication 14 ou 15, **caractérisé en ce que** les pistons de desserrage de frein (75a ; 75b) sont réalisés respectivement sous forme de corps cylindriques pleins.

17. Essieu selon l'une des revendications 14 à 16, **caractérisé en ce que** les pistons de desserrage de frein (75a ; 75b) sont étanchéifiés respectivement au moyen d'un dispositif d'étanchéité (77), en particulier d'un joint torique, dans l'alésage (76a ; 76b).

18. Essieu selon l'une des revendications 14 à 17, **caractérisé en ce que** les pistons de frein (25a ; 25b ; 25c) du dispositif de pistons de frein (21) et les pistons de desserrage de frein (75a ; 75b) du dispositif de pistons de desserrage de frein (71) sont réalisés sous forme de pièces identiques.

19. Essieu selon l'une des revendications 14 à 18, **caractérisé en ce que** le dispositif de pistons de desserrage de frein (71) comprend deux pistons de desserrage de frein (75a ; 75b) qui sont disposés concentriquement à l'axe de rotation (D) de l'arbre d'essieu (3a ; 3b) et sont disposés de manière répartie uniformément dans la direction périphérique.

20. Essieu selon l'une des revendications 14 à 19, **caractérisé en ce que** les alésages (76a ; 76b) des pistons de desserrage de frein (71) sont reliés à un raccord de pression de desserrage de frein (81) réalisé au niveau du carter d'essieu (2) au moyen d'alésages transversaux (80a ; 80b) disposés dans le carter d'essieu (2).

21. Essieu selon l'une des revendications 14 à 20, **caractérisé en ce que** les alésages (76a ; 76b) des pistons de desserrage de frein (75a ; 75b) sont disposés dans la paroi (6a ; 6b) du carter d'essieu (2).

22. Essieu selon la revendication 21, **caractérisé en ce que** les alésages transversaux (80a ; 80b) sont réalisés dans la paroi (6a ; 6b) du carter d'essieu (2).

23. Essieu selon l'une des revendications 14 à 22, **caractérisé en ce que** les pistons de desserrage de frein (75a ; 75b) sont en liaison fonctionnelle avec l'autre plateau de pression (70) respectivement par l'intermédiaire d'une tige de poussée (90).

24. Essieu selon la revendication 23, **caractérisé en ce que** les tiges de poussée (90) sont formées d'un seul tenant sur l'autre plateau de pression (70) ou fixées à celui-ci.

25. Essieu selon l'une des revendications 1 à 24, **caractérisé en ce que** l'essieu (1) comprend un premier arbre d'essieu (3a) et un deuxième arbre d'essieu (3b) disposé concentriquement au premier arbre d'essieu (3a), le dispositif de freinage (5) agissant sur les deux arbres d'essieu (3a, 3b) et étant disposé aux extrémités des deux arbres d'essieu (3a, 3b) situées du côté intérieur de l'essieu.

26. Essieu selon l'une des revendications 1 à 25, **caractérisé en ce que** l'essieu (1) est réalisé sous forme d'essieu moteur, ledit au moins un arbre d'essieu (3a ; 3b) étant réalisé sous forme d'arbre d'entraînement qui est entraîné par un moteur d'entraînement (20a, 20b), en particulier un moteur électrique.
